# EUROPÄISCHE PATENTSCHRIFT

(11) **EP 1 032 950 B1**
(45) Veröffentlichungstag und Bekanntmachung des Hinweises auf die Patenterteilung: **06.08.2003**
(21) Anmeldenummer: 99955692.1
(22) Anmeldetag: 14.09.1999
(51) Int. Cl.: H01L 41/04

(54) **ENTLADESCHALTUNG FÜR EIN KAPAZITIVES STELLGLIED**
DISCHARGING CIRCUIT FOR A CAPACITIVE ACTUATOR
CIRCUIT DE DECHARGE POUR ELEMENT DE REGLAGE CAPACITIF

(30) Priorität: 23.09.1998 DE 19843621
(43) Veröffentlichungstag der Anmeldung: 06.09.2000
(73) Patentinhaber: SIEMENS AKTIENGESELLSCHAFT, 80333 München (DE)
(72) Erfinder: HOFFMANN, Christian, D-93057 Regensburg (DE); FREUDENBERG, Hellmut, D-93080 Gro berg (DE); GERKEN, Hartmut, D-93152 Nittendorf (DE); HECKER, Martin, D-93336 Laimerstadt (DE); PIRKL, Richard, D-93053 Regensburg (DE)
(86) Internationale Anmeldenummer: DE9902912
(87) Internationale Veröffentlichungsnummer: WO00017943

(56) Entgegenhaltungen:
- EP-A- 0 464 443

## Beschreibung

Die Erfindung betrifft eine Entladeschaltung für ein kapazitives Stellglied, insbesondere für ein piezoelektrisch betriebenes Einspritzventil für eine Brennkraftmaschine, gemäß dem Oberbegriff des Anspruchs 1.

Ein piezoelektrisches Stellglied besteht aus einer Vielzahl piezokeramischer Schichten, die stapelförmig übereinander angeordnet sind und einen sogenannten "Stack" bilden, der bei Anlegen einer elektrischen Spannung seine Abmessungen, insbesondere seine Länge, ändert oder bei mechanischem Druck oder Zug eine elektrische Spannung erzeugt.

Beim Einsatz eines derartigen piezoelektrischen Stellglieds in einer Einspritzanlage wird das Stellglied mit einer elektrischen Spannung beaufschlagt und dabei elektrisch aufgeladen, um Kraftstoff einzuspritzen, wohingegen im ungeladenen Zustand des Stellglieds kein Kraftstoff eingespritzt wird. Es ist deshalb erforderlich, die Stellglieder nach einem Einspritzvorgang wieder in den sicheren Zustand zurückzuversetzen, in dem die Stellglieder ungeladen sind und dementsprechend keine Kraftstoffeinspritzung erfolgt. Bei der vorveröffentlichten deutschen Patentschrift DE 196 52 801 C1 wird hierzu ein Entladeschalter verwendet, der parallel zu den Stellgliedern geschaltet wird und diese zur Entladung kurzschließt, wodurch die elektrische Ladung der Stellglieder schnell abgebaut wird. Nachteilig hierbei ist jedoch, daß der Entladeschalter zur Entladung der Stellglieder aktiv angesteuert werden muß, so daß die Entladung der Stellglieder beim Ausfall der Stromversorgung der Steuerschaltung oder bei einem Versagen der Steuerschaltung nicht funktioniert.

Der Erfindung liegt somit die Aufgabe zugrunde, eine Entladeschaltung für ein kapazitives Stellglied zu schaffen, die auch bei einem Stromausfall der Steuerschaltung und bei einem Versagen der Steuerschaltung eine sichere Entladung der Stellglieder nach einem Stellvorgang ermöglichen.

Die Aufgabe wird, ausgehend von der vorstehend beschriebenen, bekannten Entladeschaltung gemäß dem Oberbegriff des Anspruchs 1, durch die kennzeichnenden Merkmale des Anspruchs 1 gelöst.

Die Erfindung schließt die allgemeine technische Lehre ein, in der Entladeschaltung nicht nur eine herkömmliche gesteuerte Entladung, sondern auch eine automatische Entladung vorzusehen, die selbständig einsetzt, wenn die Steuerung der herkömmlichen Entladung aussetzt, was beispielsweise aufgrund eines Stromausfalls oder einer Fehlfunktion der Fall sein kann.

Die erfindungsgemäße Entladeschaltung weist deshalb vorzugsweise einen Entladeschalter und einen Kurzschlußschalter auf, wobei der Entladeschalter nur einsetzt, wenn der Kurzschlußschalter beispielsweise aufgrund eines Stromausfalls ausfällt. In diesem Fall wird der Entladeschalter durch die auf dem Stellglied befindliche Ladung automatisch aktiviert und entlädt dann das Stellglied bis auf eine Rest-Ladespannung, bei welcher der Entladeschalter wieder automatisch sperrt und den Entladevorgang damit beendet.

Die Entladeschalter sind vorzugsweise als MOSFET-Schalter ausgebildet, jedoch sind auch andere Arten von steuerbaren Schaltelementen verwendbar, bei denen der elektrische Widerstand durch einen Steuereingang beeinflußt werden kann.

Der Steuereingang des Entladeschalters ist vorzugsweise mit dem zu entladenden Stellglied verbunden, so daß die über dem Stellglied abfallende Spannung den Entladeschalter steuert. Falls die in dem Stellglied gespeicherte Ladung hinreichend groß ist, wird der Entladeschalter automatisch leitend gesteuert, wodurch das Stellglied kurzgeschlossen wird. Die auf dem Stellglied gespeicherte Ladung fließt dann ab, bis die über dem Stellglied abfallende Spannung nicht mehr ausreicht, um den Entladeschalter leitend zu steuern, wodurch der Entladevorgang beendet wird.

Der Steuereingang des Entladeschalters wird jedoch vorzugsweise nicht allein durch die elektrische Ladung des Stellglieds gesteuert, sondern kann auch von der Steuerschaltung fest auf Masse gelegt werden, um den Entladeschalter unabhängig von der Ladung des Stellglieds zu sperren und damit eine automatische Entladung des Stellglieds zu verhindern, was im normalen Betrieb des Stellglieds wichtig ist.

In einer vorteilhaften Variante der Erfindung ist der Steuereingang des Entladeschalters über einen Spannungsteiler mit dem Stellglied verbunden, so daß nicht die volle Spannung des Stellglieds an dem Steuereingang des Entladeschalters anliegt, sondern nur ein Bruchteil dieser Spannung entsprechend der Dimensionierung des Spannungsteilers. Besteht der Spannungsteiler beispielsweise aus einem Widerstand R1=100kΩ und einem Widerstand R2=50kΩ, so beträgt die Steuerspannung nur 1/3 der Ladespannung des Stellglieds. Eine derartige Anordnung mit einem Spannungsteiler zur Ansteuerung des Entladeschalters ist besonders vorteilhaft, wenn der Kurzschlußschalter das Stellglied über eine Batterie kurzschließt, da dann die Batteriespannung an dem Stellglied und damit auch an dem Steuereingang des Entladeschalters anliegt. Der Entladeschalter wird dann von der an seinem Steuereingang anliegenden Batteriespannung leitend gesteuert, so daß ein großer Strom über den Entladeschalter fließt, was zu einer Zerstörung des Entladeschalters führen kann. Der Spannungsteiler wird deshalb vorzugsweise so dimensioniert, daß die Rest-Entladespannung über der Batteriespannung liegt, so daß die Batteriespannung nicht ausreicht, um den Entladeschalter leitend zu steuern.

In einer anderen Variante der Erfindung ist der Steuereingang des Entladeschalters über eine Zenerdiode mit dem Stellglied verbunden, so daß die Entladung erst einsetzt, wenn die Stellgliedspannung größer ist als die Summe aus der Spannungsschwelle des Entladeschalters und der Zenerdiodenspannung. Die Rest-Entladespannung läßt sich hierbei also durch eine geeignete Dimensionierung der Zenerdiode so einstellen, daß die Batteriespannung nicht ausreicht, um den Entladeschalter leitend zu steuern, wodurch eine Zerstörung des Entladeschalters durch den Batteriestrom verhindert wird.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1a:: als bevorzugtes Ausführungsbeispiel der Erfindung eine Entladeschaltung für ein kapazitives Stellglied,
- Figur 1b:: den Verlauf von Entladestrom und Stellgliedspannung bei der Entladeschaltung gemäß Figur 1a,
- Figur 2a:: eine Weiterbildung der in Figur 1a dargestellten Entladeschaltung mit einem Spannungsteiler zur Verbindung des Kurzschlußschalters mit dem Stellglied,
- Figur 2b:: den Verlauf von Entladestrom und Stellgliedspannung bei der Entladeschaltung gemäß Figur 2a,
- Figur 3a:: eine andere Variante der in Figur 1a gezeigten Entladeschaltung mit einer Zenerdiode zwischen dem Steuereingang des Entladeschalters und dem Stellglied sowie
- Figur 3b:: den Verlauf von Entladestrom und Stellgliedspannung bei der Entladeschaltung gemäß Figur 3a.

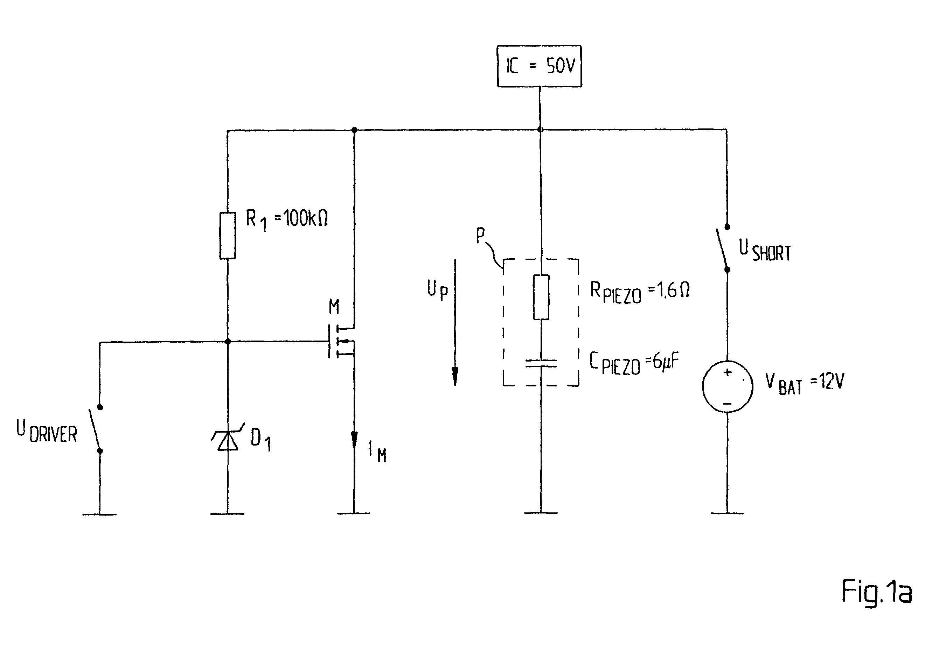

Die in Figur 1a dargestellte Entladeschaltung ist Bestandteil einer Steuerschaltung für ein Einspritzventil, das durch ein piezoelektrisches Stellglied P betätigt wird.

Im folgenden wird unter Bezugnahme auf Figur 1a zunächst der strukturelle Aufbau der erfindungsgemäßen Entladeschaltung erläutert, um anschließend die Funktion der Entladeschaltung zu beschreiben.

Das piezoelektrische Stellglied P ist vereinfacht als Reihenschaltung aus einem ohmschen Widerstand R_{PIEZO}=1,6Ω und einem Kondensator C_{PIEZO}=6µF dargestellt. Der eine Anschluß des Stellglieds P ist mit Masse verbunden, während der andere Anschluß des Stellglieds P an eine hier nur schematisch dargestellte Spannungsversorgungseinheit IC mit einer Ausgangsspannung U=50V angeschlossen ist, um das Stellglied P bei einem Stellvorgang elektrisch aufzuladen.

Parallel zu dem Stellglied P ist ein Entladeschalter M geschaltet, der als MOSFET vom Typ IRF630 ausgeführt ist und eine automatische Entladung des Stellglieds P nach einem Stellvorgang ermöglicht. Hierzu ist der Gate-Eingang des Entladeschalters M über einen ohmschen Widerstand R1=100kΩ an den Verbindungspunkt des Stellglieds P und der Spannungsversorgungseinheit IC angeschlossen, so daß die Ladespannung des Stellglieds P auf den Steuereingang des Entladeschalters M wirkt.

Darüber hinaus ist der Steuereingang des Entladeschalters M über eine Parallelschaltung aus einer ersten Zenerdiode D1 und einem Steuerschalter U_{DRIVER} mit Masse verbunden und liegt somit im leitenden Zustand des Steuerschalter U_{DRIVER} unabhängig von der Ladung des Stellglieds P stets auf Masse, so daß der Entladeschalter M in diesem Fall sperrt, wodurch eine automatische Entladung des Stellglieds P verhindert wird.

Schließlich ist parallel zu dem Stellglied P eine Reihenschaltung aus einem weiteren Schalter U_{SHORT} und einer Batterie V_{BAT} geschaltet, wobei der Schalter U_{SHORT} kein regulärer Schalter ist, sondern nur im Fehlerfall durchschaltet, was zu einem Kurzschluß des Stellglieds P auf die Batteriespannung führt.

Im folgenden wird nun die Funktionsweise der in Figur 1a dargestellten Entladeschaltung eingehend erläutert. Im Normalbetrieb der Entladeschaltung ist der Steuerschalter U_{DRIVER} durch eine externe Steuereinheit leitend geschaltet, so daß der Steuereingang des Entladeschalters M auf Masse liegt und der Entladeschalter M somit sperrt, wodurch eine automatische Entladung des Stellglieds P über den Entladeschalter M verhindert wird.

Das Stellglied P kann dann über die Spannungsversorgungseinheit IC in herkömmlicher Weise aufgeladen werden, um einen Stellvorgang einzuleiten, der bei einer Einspritzanlage einer Brennkraftmaschine dazu dient, Kraftstoff in den Brennraum einzuspritzen. Nach dem Stellvorgang wird das Stellglied P dann in herkömmlicher Weise entladen. Im entladenen Zustand wird dann kein Kraftstoff in den Brennraum der Brennkraftmaschine eingespritzt.

Die erfindungsgemäße automatische Entladung des Stellglieds P setzt erst ein, wenn die vorstehend erwähnte gesteuerte Entladung ausfällt, weil beispielsweise die Stromversorgung der externen Steuereinheit ausfällt oder die externe Steuereinheit eine Funktionsstörung hat. In diesem Fall wird der Steuerschalter U_{DRIVER} nicht mehr angesteuert, so daß der Steuereingang des Entladeschalters M nicht mehr auf Masse liegt, sondern die über dem Stellglied P anliegende Spannung annimmt und dadurch leitend gesteuert wird. Das Stellglied P wird also über den Entladeschalter M kurzgeschlossen, so daß die in dem Stellglied P gespeicherte Ladung solange abfließt, bis die Stellgliedspannung unter die Gate-Spannungsschwelle des Entladeschalters M abgesunken ist, woraufhin der Entladeschalter M wieder sperrt und der Entladevorgang beendet wird.

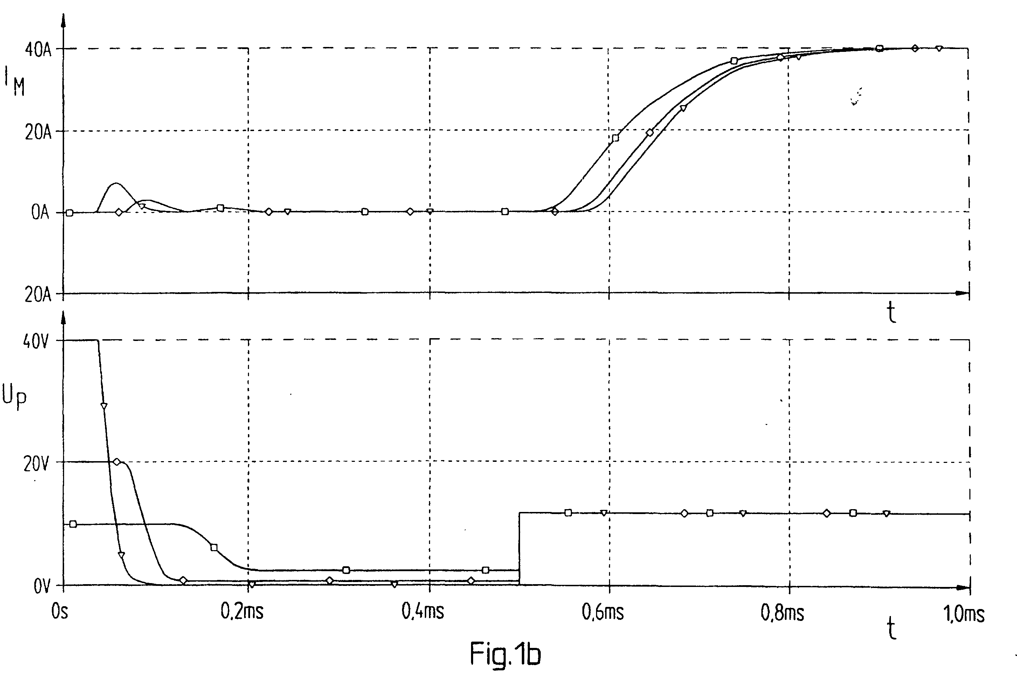

Figur 1b zeigt im oberen Diagramm den zeitlichen Verlauf des Entladestroms I_{M} durch den Entladeschalter M und im unteren Diagramm den zugehörigen Verlauf der Stellgliedspannung U_{P}, für drei Meßreihen, wobei die Meßpunkte der einzelnen Meßreihen jeweils durch Quadrate, Dreiecke bzw. Rauten gekennzeichnet sind.

Es ist deutlich erkennbar, daß die Stellgliedspannung U_{P} beim Einsetzen des Entladestroms I_{P} einbricht, da das Stellglied P über den Entladeschalter M entladen wird.

Weiterhin zeigen die Diagramme, daß die Rest-Entladespannung des Stellglieds P nahezu Null ist, was bedeutet, daß das Stellglied P fast vollständig entladen wird.

Zum Zeitpunkt t=0,5ms erfolgt dann ein Kurzschluß des Stellglieds P über die Batterie V_{BAT}, indem der Kurzschlußschalter U_{SHORT} geschlossen wird, wodurch die Stellgliedspannung auf den Wert der Batteriespannung U_{BAT}=12V springt und der Entladeschalter M leitend gesteuert wird, so daß der Entladestrom I_{M} wieder ansteigt.

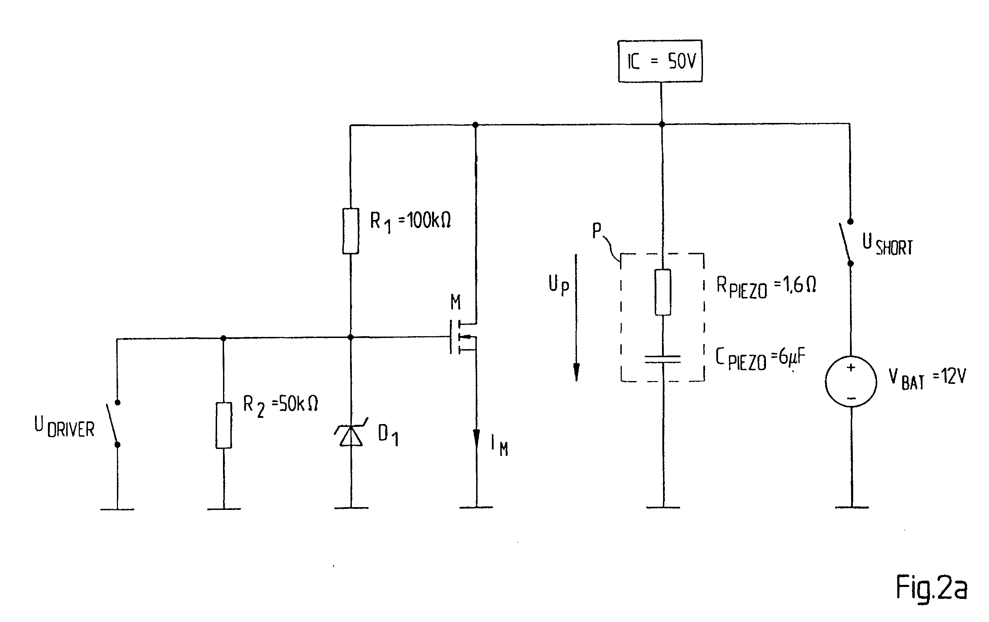

Die in Figur 2a dargestellte Entladeschaltung stimmt weitgehend mit der in Figur 1a dargestellten und vorstehend erläuterten Entladeschaltung überein, so daß im wesentlichen auf die vorstehende Beschreibung verwiesen werden kann.

Der wesentliche Unterschied der in Figur 2a dargestellten Entladeschaltung gegenüber der vorstehend beschriebenen Entladeschaltung besteht in der Ansteuerung des Steuereingangs des Entladeschalters M, der über einen Spannungsteiler mit dem Stellglied P verbunden ist. Hierzu ist der ersten Zenerdiode D1 ein ohmscher Widerstand R2=50kΩ parallel geschaltet, der mit dem Widerstand R1=100kΩ den Spannungsteiler bildet, so daß am Steuereingang des Entladeschalters nur 1/3 der Stellgliedspannung U_{P} anliegt. Durch diese Teilung der Stellgliedspannung U_{P} wird verhindert, daß der Entladeschalter M bei einem Kurzschluß des Stellglieds P über den Kurzschlußschalter U_{SHORT} und die Batterie V_{BAT} durch die Batteriespannung leitend gesteuert wird. Dies ist wichtig, da die Batterie V_{BAT} andernfalls einen großen Strom I_{M} über den leitenden Entladeschalter M treiben würde, wodurch der Entladeschalter M zerstört werden könnte. Der aus den Widerständen R1 und R2 Bestehende Spannungsteiler wird also so dimensioniert, daß die Rest-Entladespannung des Stellglieds P über der Batteriespannung liegt.

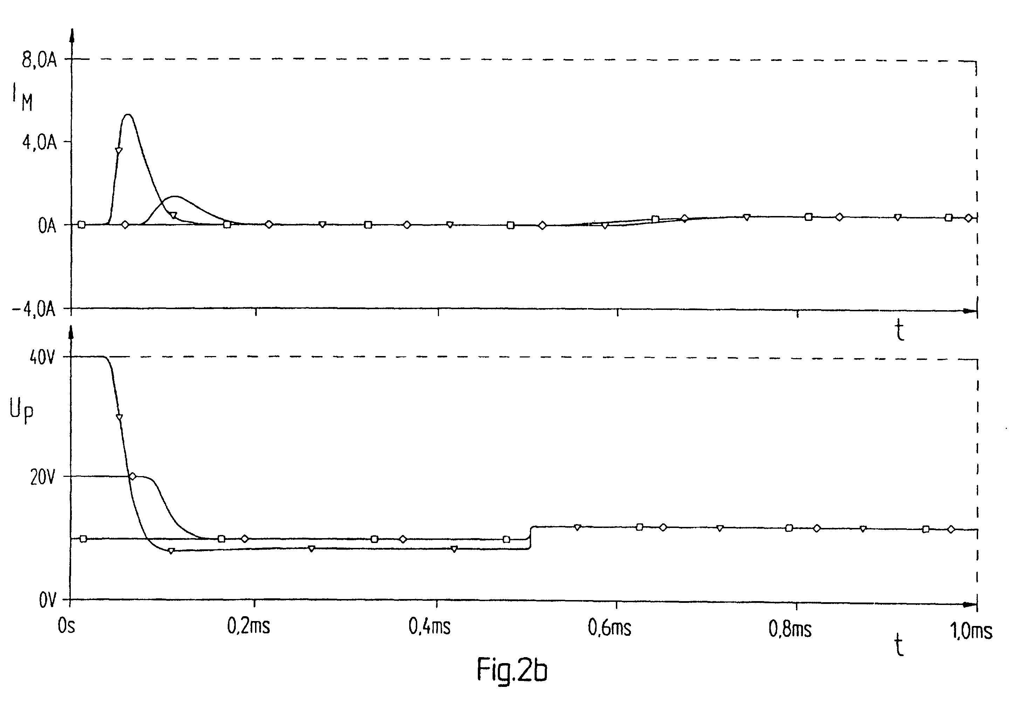

Figur 2b zeigt im oberen Diagramm den zeitlichen Verlauf des Entladestroms bei der in Figur 2a dargestellten Entladeschaltung, während das untere Diagramm den zugehörigen Verlauf der Stellgliedspannung wiedergibt. Die Diagramme geben jeweils drei Meßreihen wieder, wobei die Meßpunkte entsprechend der jeweiligen Meßreihe durch Dreiecke, Quadrate oder Rauten gekennzeichnet sind.

Es ist wiederum deutlich erkennbar, daß die Stellgliedspannung beim Einsetzen des Entladestroms einbricht, da das Stellglied P dann über den Entladeschalter M kurzgeschlossen wird. Im Gegensatz zu dem in Figur 1b dargestellten Diagramm steigt der Entladestrom jedoch nicht wieder an, wenn das Stellglied P im Zeitpunkt t=0,5ms über den Kurzschlußschalter U_{SHORT} und die Batterie V_{BAT} kurzgeschlossen wird. Dies liegt daran, daß der Steuereingang des Entladeschalters M mit einem Spannungsteiler verbunden ist, so daß am Steuereingang des Entladeschalters M nicht die volle Batteriespannung V_{BAT} anliegt. Der Spannungsteiler aus den Widerständen R1 und R2 ist nun so dimensioniert, daß die Batteriespannung nicht ausreicht, um die Gate-Spannungsschwelle des Entladeschalters M zu erreichen, so daß der Entladeschalter M auch beim Schließen des Kurzschlußschalters U_{SHORT} weiterhin sperrt.

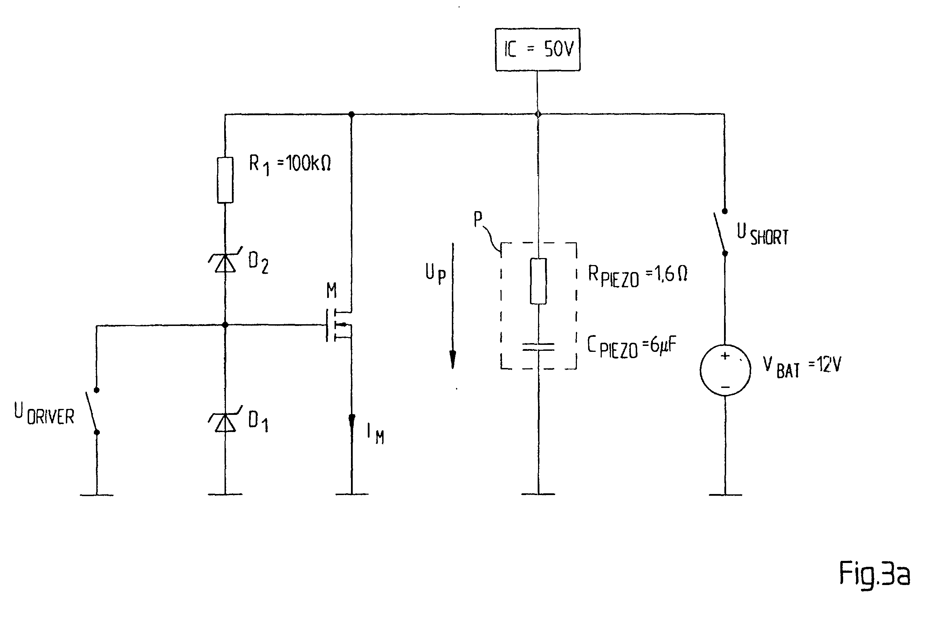

Die in Figur 3a dargestellte erfindungsgemäße Entladeschaltung stimmt ebenfalls weitgehend mit der in Figur 1a dargestellten Entladeschaltung über, so daß im wesentlichen auf die zugehörige Beschreibung verwiesen werden kann.

Der einzige Unterschied dieser Entladeschaltung gegenüber der in Figur 1a dargestellten Entladeschaltung besteht wiederum in der Ansteuerung des Steuereingangs des Entladeschalters M, der über eine Reihenschaltung aus einem Widerstand R1=100kΩ und einer zweiten Zenerdiode D2 mit dem Stellglied P verbunden ist. Die am Steuereingang des Entladeschalters M anliegende Steuerspannung ist also gegenüber der Stellgliedspannung U_{P} um die Zenerdiodenspannung U_{Z} verringert. Dies bedeutet, daß der Entladeschalter M erst leitend gesteuert wird, wenn die Stellgliedspannung U_{P} die Summe aus der Zenerdiodenspannung U_{Z} und der Gate-Spannungsschwelle des Entladeschalters M überschreitet, so daß sich die Rest-Entladespannung des Stellglieds P durch eine geeignete Dimensionierung der zweiten Zenerdiode D2 entsprechend einstellen läßt. Die zweite Zenerdiode D2 ist hierbei so dimensioniert, daß die Batteriespannung V_{BAT} nicht ausreicht, um den Entladeschalter M leitend zu steuern. Dies ist wichtig, da die Batterie V_{BAT} andernfalls bei einem Kurzschluß einen großen Strom I_{M} über den Entladeschalter M treiben und diesen dadurch zerstören würde.

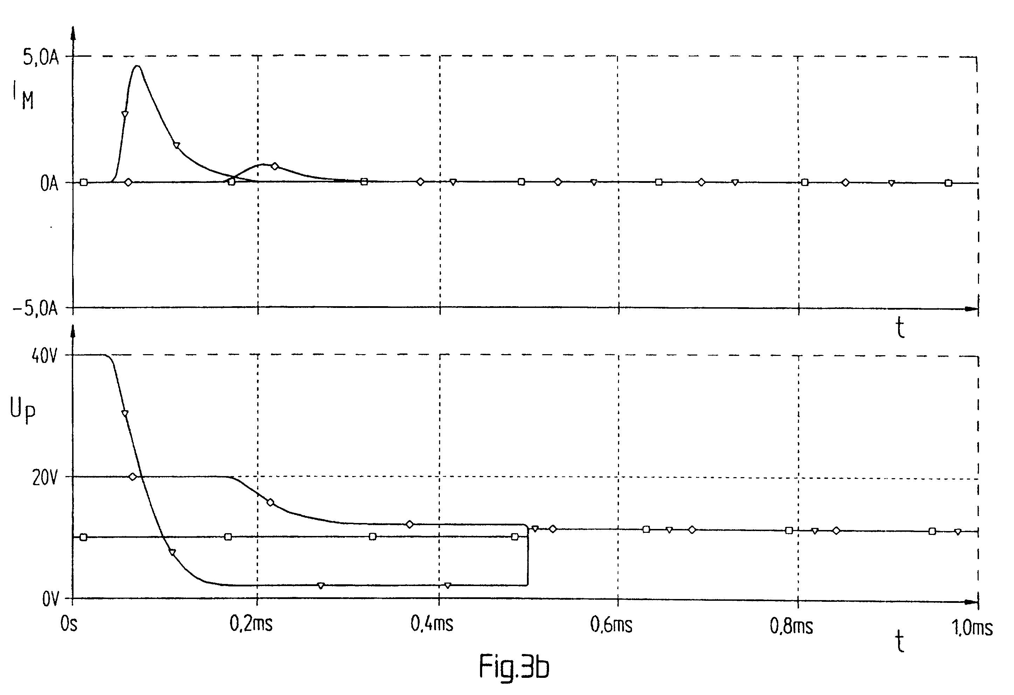

Figur 3b zeigt im oberen Diagramm den zeitlichen Verlauf des Entladestroms IM bei der in Figur 3a dargestellten Entladeschaltung, während das untere Diagramm den zugehörigen Verlauf der Stellgliedspannung U_{P} wiedergibt. Die Diagramme geben jeweils drei Meßreihen wieder, wobei die Meßpunkte entsprechend der jeweiligen Meßreihe durch Dreiecke, Quadrate oder Rauten gekennzeichnet sind.

Auch hierbei ist wieder erkennbar, daß die Stellgliedspannung U_{P} beim Einsetzen des Entladestroms I_{M} einbricht. Der Entladestrom I_{M} steigt jedoch nicht wieder an, wenn das Stellglied P im Zeitpunkt t=0,5ms über den Kurzschlußschalter U_{SHORT} kurzgeschlossen wird, obwohl dann die Batteriespannung U_{BAT}=12V am Stellglied P anliegt. Dies liegt daran, daß der Steuereingang des Entladeschalters M über die zweite Zenerdiode D2 mit dem Stellglied P verbunden ist, so daß die Steuerspannung gegenüber der Batteriespannung bzw. der Stellgliedspannung um die Zenerdiodenspannung verringert wird. Der Entladeschalter M würde also bei einem Kurzschluß des Stellglieds P über den Kurzschlußschalter U_{SHORT} und die Batterie V_{BAT} nur dann durchschalten, wenn die Batteriespannung größer ist als die Summe aus der Zenerdiodenspannung und der Gate-Spannungsschwelle, was jedoch nicht der Fall ist, um in diesem Fall eine Zerstörung des Entladeschalters M durch extrem große Entladeströme I_{M} zu verhindern.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Entladeschaltung für ein kapazitives Stellglied (P), insbesondere für ein piezoelektrisch betriebenes Einspritzventil für eine Brennkraftmaschine, mit einem im Stromkreis des Stellglieds (P) angeordneten steuerbaren Entladeschalter (M) zum Entladen des Stellglieds (P), wobei der Steuereingang des Entladeschalters (M) mit einer Steuereinheit verbunden ist, die den Entladeschalter (M) im Normalbetrieb unabhängig von der Ladung des Stellglieds (P) sperrt und damit eine Entladung verhindert,
**dadurch gekennzeichnet,**
**daß** der Steuereingang des Entladeschalters (M) zusätzlich mit dem Stellglied (P) verbunden ist, um den Entladeschalter (M) bei einem Ausfall der Steuereinheit und einem aufgeladenen Stellglied (P) durch die elektrische Spannung des Stellglieds (P) automatisch leitend zu steuern und dadurch das Stellglied (P) zu entladen.

2. Entladeschaltung nach Anspruch 1, **dadurch gekennzeichnet, daß** der Steuereingang des Entladeschalters (M) über einen Widerstand (R1) mit dem Stellglied (P) verbunden ist.

3. Entladeschaltung nach Anspruch 1 oder 2, **dadurch gekennzeichnet, daß** im Stromkreis des Stellglieds (P) ein steuerbarer Kurzschlußschalter (Ushort) angeordnet ist, um das Stellglied (P) kurzschliessen und damit entladen zu können.

4. Entladeschaltung nach Anspruch 3, **dadurch gekennzeichnet, daß** der Steuereingang des Entladeschalters (M) über einen Spannungsteiler (R1, R2) mit dem Stellglied (P) verbunden ist, wobei der Spannungsteiler (R1, R2) so dimensioniert ist, daß die bei einem Kurzschluß des Kurzschlußschalters (Ushort) am Stellglied (P) anliegende Batteriespannung (V_{BAT}) nicht ausreicht, um den Entladeschalter (M) leitend zu steuern.

5. Entladeschaltung nach einem der vorhergehenden Ansprüche, **dadurch gekennzeichnet, daß** der Steuereingang des Entladeschalters (M) über eine Zenerdiode (D2) und einen Widerstand (R1) mit dem Stellglied (P) verbunden ist, wobei die Zenerdiode (D2) so dimensioniert ist, daß die bei einem Kurzschluß des Kurzschlußschalters (Ushort) am Stellglied (P) anliegende Batteriespannung (V_{BAT}) nicht ausreicht, um den Entladeschalter (M) leitend zu steuern.

6. Entladeschaltung nach einem der vorhergehenden Ansprüche, **dadurch gekennzeichnet, daß** der Entladeschalter ein MOSFET ist.

## Claims

1. Discharge circuit for a capacitive actuating element (P), particularly for a piezoelectric-operated injection valve for an internal combustion engine, with a controllable discharge switch (M) for discharging the actuating element (P) arranged in the circuit of the actuating element (P), with the control input of the discharge switch (M) being connected to a control unit, which blocks the discharge switch (M) in normal operation regardless of the charge of the actuating element (P) and thus prevents a discharge,
**characterised in that**
the control input of the discharge switch (M) is additionally connected to the actuating element (P) in order in the event of failure of the control unit when the actuating element (P) is charged, to automatically switch the discharge switch (M) to conducting by means of the voltage of the actuating element (P) and thus discharge the actuating element (P).

2. Discharge circuit according to Claim 1, **characterised in that** the control input of the discharge switch (M) is connected to the actuating element (P) through a resistor (R1).

3. Discharge circuit according to Claim 1 or 2, **characterised in that** a controllable short-circuit switch (U_{SHORT}) is arranged in the circuit of the actuating element (P), to be able to short-circuit and thus discharge the actuating element (P).

4. Discharge circuit according to Claim 3, **characterised in that** the control input of the discharge switch (M) is connected via a voltage divider (R1, R2) to the actuating element (P), with the voltage divider (R1, R2) being dimensioned so that the battery voltage (V_{BAT}) present at the actuating element (P) in the event of a short-circuit of the short-circuit switch (U_{SHORT}) is not sufficient to switch the discharge switch (M) to conducting.

5. Discharge circuit according to one of the preceding claims, **characterised in that** the control input of the discharge switch (M) is connected via a zener diode (D2) and a resistor (R1) to the actuating element (P), with the zener diode (D2) being dimensioned so that the battery voltage (V_{BAT}) present at the actuating element (P) in the event of a short-circuit of the short-circuit switch (U_{SHORT}) is not sufficient to switch the discharge switch (M) to conducting.

6. Discharge circuit according to one of the preceding claims, **characterised in that** the discharge switch is a MOSFET.

## Revendications

1. Circuit de décharge pour un composant de réglage capactif (P), en particulier pour une soupape d'injection piézoélectrique pour un moteur à combustion interne, avec un commutateur de décharge contrôlable (M) monté sur le circuit électrique du composant de réglage (P) pour décharger le composant de réglage (P), l'entrée de commande du commutateur de décharge (M) étant reliée à une unité de commande qui bloque en mode de fonctionnement normal le commutateur de décharge (M) quelle que soit la charge du composant de réglage (P) et empêche ainsi une décharge,
**caractérisé en ce que**
l'entrée de commande du commutateur de décharge (M) est également reliée au composant de réglage (P) pour mettre automatiquement le commutateur de décharge (M) à l'état passant avec la tension électrique du composant de réglage (P), en cas de défaillance de l'unité de commande et d'un composant de réglage (P) chargé, et ainsi décharger le composant de réglage (P).

2. Circuit de décharge selon la revendication 1, **caractérisé en ce que** l'entrée de commande du commutateur de décharge (M) est reliée au composant de réglage (P) par une résistance (R1).

3. Circuit de décharge selon la revendication 1 ou 2, **caractérisé en ce que** dans le circuit électrique du composant de réglage (P) est monté un commutateur de court-circuit (Ushort) pour court-circuiter le composant de réglage (P) et pourvoir ainsi le décharger.

4. Circuit de décharge selon la revendication 3, **caractérisé en ce que** l'entrée de commande du commutateur de décharge (M) est reliée au composant de réglage (P) par un diviseur de tension (R1, R2), le diviseur de tension (R1, R2) étant dimensionné de telle sorte que la tension de batterie (VBAT) présente sur le composant de réglage (P) lors d'un court-circuit du commutateur de court-circuit (Ushort) ne suffit pas pour mettre le commutateur de décharge (M) à l'état passant.

5. Circuit de décharge selon l'une des revendications précédentes, **caractérisé en ce que** l'entrée de commande du commutateur de décharge (M) est reliée au composant de réglage (P) par une diode Zener (D2) et une résistance (R1), la diode Zener (D2) étant dimensionnée de telle sorte que la tension de batterie (VBAT) présente sur le composant de réglage (P) lors d'un court-circuit du commutateur de court-circuit (Ushort) ne suffit pas pour mettre le commutateur de décharge (M) à l'état passant.

6. Circuit de décharge selon l'une des revendications précédentes, **caractérisé en ce que** le commutateur de décharge est un MOSFET.
